(19) Europäisches Patentamt
European Patent Office
Office européen des brevets

(11) **EP 2 270 548 B1**

(12) **FASCICULE DE BREVET EUROPEEN**

(45) Date de publication et mention de la délivrance du brevet:
**21.03.2012 Bulletin 2012/12**

(51) Int Cl.:
***G01V 11/00*** *(2006.01)*   ***G06F 17/50*** *(2006.01)*

(21) Numéro de dépôt: **10290255.8**

(22) Date de dépôt: **12.05.2010**

(54) **Méthode pour modifier des proportions de faciès lors du calage d'historique d'un modèle géologique**

Methode zur Veränderung der Proportionen von Gesteinsfazien bei der Einstellung einer Zeitreihe eines geologischen Modells

Method for modifying the proportions of facies when calibrating the history of a geological model

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **26.06.2009 FR 0903163**

(43) Date de publication de la demande:
**05.01.2011 Bulletin 2011/01**

(73) Titulaire: **IFP Energies nouvelles**
**92852 Rueil-Malmaison Cedex (FR)**

(72) Inventeurs:
• **Tillier, Elodie**
  **92500 Rueil Malmaison (FR)**
• **Enchery, Guillaume**
  **92500 Rueil Malmaison (FR)**
• **Gervais-Couplet, Véronique**
  **92500 Rueil Malmaison (FR)**
• **Le Ravalec, Mickaële**
  **92500 Rueil Malmaison (FR)**

(56) Documents cités:
• **O. LERAT ET AL.: "Construction of a Stochastic Geological Model Constrained by High-Resolution 3D Seismic Data - Application to the Girassol Field Offshore Angola" SOCIETY OF PETROLEUM ENGINEERS, 110422, 11 novembre 2007 (2007-11-11), - 14 novembre 2007 (2007-11-14) XP002568891 Arnaheim, California, USA**
• **F. ROGGERO ET AL.: "Matching of Production History and 4D Seismic Data - Application to the Girassol Field, Offshore Angola" SOCIETY OF PETROLEUM ENGINEERS, 109929, 11 novembre 2007 (2007-11-11), - 14 novembre 2007 (2007-11-14) XP002568892**
• **C. V. DEUTSCH: "A sequential indicator simulation program for categorical variables with point and block data: BlockSIS" COMPUTER AND GEOSCIENCES, vol. 32, 2006, pages 1669-1681, XP002568893**
• **S. MAO, A. JOURNEL: "Conditional 3D simulation of lihofacies with 2D seismic data" COMPUTER AND GEOSCIENCES, vol. 25, 1999, pages 845-862, XP002568894**

## Description

La présente invention concerne le domaine de l'exploration et l'exploitation de gisements pétroliers, et plus particulièrement le domaine de l'imagerie des gisements pétroliers. La construction d'images, représentatives du sous-sol et compatibles avec des données mesurées aux puits et/ou sur l'ensemble du gisement étudié, permet l'exploitation de tels gisements.

Plus particulièrement, l'invention concerne une méthode de calage d'historique (« history matching ») d'un modèle géologique représentatif d'un réservoir souterrain de façon à respecter des proportions moyennes de faciès lithologiques.

L'étude d'un champ pétrolier, nécessite la construction de modèles, dits « modèles géologiques » au sens large. Ces modèles bien connus et largement utilisés dans l'industrie pétrolière, permettent de déterminer de nombreux paramètres techniques relatifs à la recherche, l'étude ou l'exploitation d'un réservoir d'hydrocarbures par exemple. En effet, ce modèle géologique est représentatif de la structure du réservoir ainsi que de son comportement. On peut ainsi par exemple déterminer quelles sont les zones qui ont le plus de chances de contenir des hydrocarbures, les zones dans lesquelles il peut être intéressant/nécessaire de forer un puit d'injection pour améliorer la récupération des hydrocarbures, le type d'outils à utiliser, les propriétés des fluides utilisés et récupérés.... Ces interprétations de modèles géologiques en termes de « paramètres techniques d'exploitation » sont bien connues des spécialistes, même si de nouvelles méthodes sont régulièrement développées. Il est donc crucial, dans le domaine pétrolier, de construire un modèle aussi précis que possible. Pour ce faire, l'intégration de toutes les données disponibles est indispensable.

Un modèle géologique constitue une maquette du sous-sol, représentative à la fois de sa structure et de son comportement. Généralement, ce type de maquette est représenté sur un ordinateur, et l'on parle alors de modèle numérique. En deux dimensions (2D), on parle de carte. Ainsi, une carte correspond à une image, constituée de pixels, chacun des pixels contenant une information relative au comportement du sous-sol étudié (un réservoir pétrolier par exemple). Ces pixels correspondent à une position géographique précise, et sont repérés par des coordonnées. Lorsque l'on attribue des valeurs à un pixel, par simulation par exemple, on parle alors de point de simulation. L'image représentative (la carte ou le modèle) est générée sur tout support (papier, écran d'ordinateur, ...).

Les réservoirs pétroliers sont en général des milieux poreux très hétérogènes et fracturés. La modélisation d'un réservoir, c'est-à-dire la construction d'un modèle géologique représentatif du réservoir, nécessite de recourir à des procédés de construction dits « probabilistes » du fait de la limitation de l'information disponible (nombre de puits restreint, ...). De ce fait, les modèles géologiques construits à partir de ces procédés probabilistes sont appelés « modèles stochastiques ». La construction d'un modèle stochastique de réservoir doit d'abord dépendre de l'environnement du dépôt géologique, ce qui permet de représenter les hétérogénéités majeures qui contrôlent l'écoulement des fluides. Ensuite, un modèle doit être contraint par des données quantitatives telles que mesures de carottes, diagraphie, sismique, ce qui permet d'augmenter davantage la fiabilité du modèle pour la prévision en production. Ainsi, la modélisation géostatistique est utilisée pour construire des modèles géologiques respectant au mieux les données statiques disponibles (données de puits, données sismiques, etc.), c'est-à-dire les données directement liées aux propriétés modélisées et invariables dans le temps.

Pour obtenir la meilleure image possible du réservoir, il est nécessaire, en plus des données statiques, d'intégrer les données dynamiques. Les données dynamiques sont indirectement liées aux propriétés modélisées et dépendent du temps : ce sont, par exemple, les débits d'huile mesurés aux puits, les concentrations de traceurs ou encore les campagnes d'acquisition sismique répétées à des temps successifs.

## État de la technique

L'intégration des données de production et de sismique dans un modèle de réservoir est un processus appelé « calage d'historique » (« history matching ») d'un modèle géologique. Le principe est de modifier le modèle géologique initial itérativement jusqu'à ce que le comportement dynamique simulé s'approche autant que possible du comportement dynamique observé. Ce problème se résout en ajustant certains paramètres du modèle géologique en minimisant une fonctionnelle, dite fonction objectif, qui quantifie la différence entre les données dynamiques et les réponses correspondantes simulées.

De nombreuses techniques ont été développées ces dernières années pour modifier le modèle géologique tout en préservant la cohérence vis-à-vis des observations statiques. Un modèle géologique est habillé de propriétés pétrophysiques. Les données statiques disponibles sont utilisées pour définir des fonctions aléatoires pour chaque propriété pétrophysique. Une représentation de la répartition spatiale d'une propriété pétrophysique est une réalisation d'une fonction aléatoire. Les techniques de perturbation considérées permettent de modifier une réalisation d'une fonction aléatoire tout en assurant le fait que la réalisation perturbée est aussi une réalisation de cette même fonction aléatoire.

Parmi ces techniques de perturbation, on peut citer la méthode des points pilotes développée par RamaRao et al. (1995) et Gomez-Hernandez et al. (1997), ainsi que la méthode des déformations graduelles proposée par Hu (2000). Ces méthodes permettent de modifier la distribution spatiale des hétérogénéités.

- RamaRao, B.S; Lavenue, A.M.; Marsilly, G. de; Marietta, M.G.; Pilot point methodology for automated calibration of an ensemble of conditionally simulated transmissivity fields. 1. Theory and computational experiments. WRR, 1995, vol. 31 (3), 475-493.

- Gomez-Hernandez, J., Sahuquillo, A., et Capilla, J.E., 1997, Stochastic simulation of transmissivity fields conditional to both transmissivity and piezometric data, 1. Theory, J. of Hydrology, 203, 162-174.

- Hu, L-Y., 2000, Gradual Deformation and iterative calibration of Gaussian-related stochastic models, Math. Geol., 32(1), 87-108.

Une propriété particulièrement sensible pour l'exploitation d'un réservoir est la proportion de faciès lithologiques. En effet, ces proportions de faciès lithologiques peuvent avoir un impact majeur sur le comportement dynamique d'un champ pétrolier. Elles peuvent être identiques sur l'ensemble du domaine (cas stationnaire) ou varier selon la position (cas non stationnaire). On appelle faciès lithologique une propriété d'une roche. Par exemple, le faciès lithologique peut se référer à la nature géologique de la roche (argile, grès, calcaire...), à son type de porosité (roche non consolidée et très poreuse; roche peu poreuse ...), à la nature du fluide piégé dans sa porosité (saumure; huile; gaz ...).

De façon habituelle, on utilise les données aux puits pour déterminer une ou plusieurs courbes de proportions verticales de faciès. Ces courbes donnent la probabilité d'occurrence de chaque faciès en fonction de la profondeur. Ces courbes sont ensuite utilisées pour construire, à partir de techniques de krigeage notamment, une matrice de proportion de faciès, qui détermine pour chaque maille de la grille représentative du réservoir les probabilités d'occurrence des différents faciès. Ces probabilités contraignent la distribution spatiale des faciès dans le modèle géologique.

Hoffman et Caers (2007) proposent une méthode permettant d'augmenter ou de diminuer la proportion des différents faciès en fonction des résultats dynamiques de production simulés. Cette méthode est complémentaire de la méthode de perturbation des probabilités (Hoffman et Caers, 2005) et ne peut être utilisée seule.

- Hoffman B.T., and Caers, J., History matching by jointly perturbing local facies proportions and their spatial distribution: Application to a North Sea reservoir, Journal of Petroleum Science and Engineering 57 (2007) 257-272.
- Hoffman B.T., and Caers, J., Regional probability perturbation for history matching, J. Pet. Sci. Eng. 46,53-71.

Une autre approche proposée par Liu et Oliver (2004), consiste à modifier les quantités des différents faciès en agissant directement sur les seuils de troncature utilisés dans la méthode pluri-Gaussiennes. La méthode des pluri-Gaussiennes est une méthode classique, connue des spécialistes, pour générer une réalisation en faciès.

- Liu, N. and Oliver, D.S., Automatic History Matching of Geologic Facies, SPE 84594, Proceeding of the 2003 SPE Annual, Technical Conference and Exhibition, SPE Journal, 9(4): 1-15 , 2004.

- Le Loc'h G. and Galli, A., 1997 : Truncated Plurigaussian method : theoretical and practical points of view. Geostatistics Wollongong'96, E.Y. Baafi and N.A. Schofields eds, Kluwe, p. 211-222.

Enfin, une autre méthode est décrite dans le brevet FR 2.914.434. Il s'agit d'une méthode de paramétrisation qui consiste à modifier le ratio de la proportion moyenne sur une zone d'une association de faciès par rapport à une sélection de faciès.

L'objet de l'invention, concerne une méthode alternative permettant de modifier un modèle géologique en transformant localement ou globalement les proportions de faciès lithologiques, afin de contraindre ce modèle géologique par des données dynamiques. La méthode s'appuie sur des techniques de co-krigeage pour assurer la continuité spatiale des perturbations appliquées localement aux proportions, de façon à obtenir une image plus réaliste du gisement pétrolier étudié.

**La méthode selon l'invention**

L'invention concerne une méthode pour optimiser l'exploitation d'un milieu souterrain, à partir d'un modèle géologique constitué d'un ensemble de mailles discrétisant ce milieu, une valeur de faciès étant affectée à chaque maille. On mesure une différence entre des valeurs de données dynamiques mesurées et des valeurs de données dynamiques simulées à l'aide d'un simulateur d'écoulement appliqué au modèle géologique, et l'on modifie le modèle géologique pour réduire cette différence. La méthode comporte les étapes suivantes :

a. on définit au moins une zone géographique Z au sein du milieu souterrain en sélectionnant un ensemble de mailles du modèle géologique ;

b. on détermine pour $k$ faciès, au moyen d'un processus d'optimisation, une proportion moyenne $\left(p_z^k\right)^Y$ sur la zone Z permettant de réduire la différence ;

c. on modifie les proportions des $k$ faciès en chaque maille de la zone géographique, par une méthode de co-krigeage d'indicatrice par bloc contrainte par les proportions moyennes $\left(p_z^k\right)^Y$, et on affecte une valeur nulle à toute proportion ainsi modifiée et inférieure à zéro, on affecte la valeur un à toute proportion ainsi modifiée et supérieure à un, et enfin, on normalise l'ensemble des proportions de faciès ainsi modifiée pour que dans chaque maille, la somme des proportions de faciès soit égale à un ;

d. on simule un nouveau modèle géologique contraint par les proportions de faciès modifiées, et l'on optimise l'exploitation du milieu souterrain au moyen du modèle ainsi simulé.

Selon l'invention, la zone géographique peut être un sous domaine du modèle géologique, un groupe de sous domaines du modèle géologique ou l'ensemble du modèle géologique.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 illustre des courbes de proportions de faciès de référence ($VPC_{ref}$) et après perturbation suivant la méthode selon l'invention ($VPC_{per}$).

- La figure 2 illustre une définition de deux régions, chenaux et levées, dans une couche sédimentaire C3.

- La figure 3 représente la distribution spatiale des faciès sur le modèle réservoir avant (*Init*) et après (*Opt*) calage des proportions de faciès pour des couches sédimentaires C1 et C2, ainsi que la distribution spatiale exacte (*Exa*) des faciès.

- La figure 4 représente la distribution spatiale des faciès sur le modèle réservoir avant (*Init*) et après (*Opt*) calage des proportions de faciès pour des couches sédimentaires C3 et C4, ainsi que la distribution spatiale exacte (*Exa*) des faciès.

**Description détaillée de la méthode**

L'invention concerne une méthode permettant de réaliser un calage d'un modèle géologique par rapport à des données dynamiques, en modifiant localement ou globalement les proportions de faciès lithologiques.
La méthode peut comporter les étapes suivantes :

1. Acquisition de mesures relatives à la structure et la nature du réservoir souterrain

2. Construction d'un modèle géologique représentatif du réservoir souterrain

3. Calage du modèle géologique par les données dynamiques (calage d'historique)

4. Optimisation de l'exploitation du milieu souterrain à partir du modèle calé

1. Acquisition de mesures relatives à la structure et la nature du milieu poreux

Tout d'abord, on mesure sur le terrain des données statiques (diagraphies, mesures sur des échantillons prélevés dans les puits, sismique...). Ces données fournissent des informations sur la structure du milieu, la nature et les propriétés pétrophysiques des roches qui constituent le milieu souterrain. Ces mesures permettent de discrétiser le milieu souterrain sous forme d'un maillage, et d'associer à chaque maille de ce milieu des valeurs de propriétés physiques caractérisant le milieu poreux. Ces mesures permettent également de construire des courbes de proportions verticales de faciès. Ces courbes décrivent l'évolution des proportions de chaque faciès en fonction de la profondeur. Une telle courbe est obtenue à l'aide des informations de puits. Pour chaque couche du réservoir, à l'échelle stratigraphique, on décompte la fréquence d'occurrence de chaque faciès pour en déduire une proportion. On peut avoir une ou plusieurs courbes de proportions verticales pour décrire un réservoir. Si on n'en a qu'une, les proportions de faciès sont stationnaires. Dans le cas contraire, si les courbes sont différentes, les proportions de faciès sont non stationnaires. On utilise ces courbes pour déterminer une matrice de proportions spécifiant la proportion ou la probabilité d'occurrence de chaque faciès dans chaque maille du réservoir. En perturbant les courbes de proportions verticales, on peut donc modifier la totalité de la matrice de proportions.

On mesure également sur le terrain des données dynamiques (données de production, essais de puits, temps de percée, données issues de sismiques répétées (4D)...) dont la particularité est de varier au cours du temps en fonction des écoulements de fluide dans le réservoir.

2. Construction d'un modèle géologique représentatif du réservoir souterrain

Tout d'abord, un modèle géologique représentatif d'un réservoir pétrolier est élaboré à une échelle fine. Ce modèle respecte les données statiques, c'est-à-dire les données qui ne dépendent pas des mouvements de fluide au sein du réservoir modélisé.

Selon l'invention, ce modèle géologique initial décrit le réservoir étudié en faciès lithologiques. De nombreuses techniques permettant de construire un modèle géologique contraint sont connues des spécialistes. On peut par exemple citer les techniques de modélisation non stationnaire telles que la simulation par gaussiennes seuillées, la simulation séquentielle d'indicatrices ou la simulation multi-points. Ces techniques sont décrites respectivement dans les document suivants :

- Le Loc'h G. and Galli A., 1997 : Truncated plurigaussian method : theoretical and practical points of view. In : Geostatistics Wollongong'96, E.Y. Baafi and N.A Schofield eds, Kluwer, p.211-222

- P. Goovaerts, "Geostatistics for Natural Resources Evaluation", Oxford University Press, 1997.

- S. Strebelle, "Conditional Simulation of Complex Geological Structures Using Multi-point Statistics", Mathematical Geology, 34(1), p. 1-21, 2002

Selon l'invention, chacune des mailles du modèle géologique est renseignée au moins par les valeurs de proportions de faciès lithologiques, par exemple : 15% de sable, 30% de grès, 5% d'argile, etc. Les proportions de faciès peuvent être identiques sur toutes les mailles d'une couche du modèle (on parle alors d'un modèle stationnaire) ou être variables d'une maille à une autre (cas d'un modèle non stationnaire). Ces proportions initiales de faciès géologiques peuvent être déterminées à partir des données de puits et/ou d'attributs ou de données sismiques. Une telle étape est bien connue des spécialistes et l'on peut citer par exemple les documents suivants :

- Doligez B., Fournier F., Jolivet G., Gancarski S., Beucher H., 2002 : Seismic facies map integration in geostatistical geological model: a field case. EAGE, conference & technical exhibition of European Association of Geoscientists & Engineers, 64th, Florence, 27-30 May 2002, Extended abstracts, Vol. 2, P215-219.

- Barens L., Biver P., 2004 : Reservoir Facies Prediction from Geostatistical Inverted Seismic Data, Abu Dhabi International Conference and Exhibition, 10-13 October, SPE 88690-MS.

- la demande de brevet française FR 06/10.792

A partir des proportions de faciès et des données de puits, une technique de simulation géostatistique, telle que la méthode des gaussiennes seuillées, est utilisée pour générer une ou plusieurs réalisations de distributions de faciès lithologiques sur le maillage géologique. Pour chaque réalisation, la probabilité de simulation d'un faciès lithologique sur une maille est conditionnée par les données de proportions de faciès. De façon avantageuse ce modèle géologique est également renseigné en propriétés pétrophysiques (porosité, perméabilité, ...), qui sont assignées aux faciès lithologiques.

Le réservoir pétrolier est équipé de puits pour lesquels on connaît des données de production, à partir desquelles on souhaite caler le modèle géologique.

3. Calage du modèle géologique aux données dynamiques (calage d'historique)

Habituellement, les boucles de calage d'historique se résument comme suit. Tout d'abord, le modèle géologique est transféré vers une échelle grossière, appelée « échelle réservoir ». Ces notions d'échelles sont parfaitement connues des spécialistes. On obtient alors un modèle, dit « modèle de réservoir » sur lequel on effectue des simulations numériques d'écoulement à l'aide d'un simulateur d'écoulement, type de logiciel bien connu des spécialistes. Le passage à l'échelle du modèle de réservoir permet de réduire le nombre de mailles par rapport au modèle géologique fin. De fait, le temps CPU requis pour une simulation d'écoulement devient acceptable en pratique. La simulation d'écoulement fournit des données dynamiques simulées, qui sont alors comparées aux données dynamiques effectivement mesurées. Si l'écart entre les données dynamiques simulées et les données dynamiques mesurées est suffisamment faible, le processus de calage s'arrête. Dans le cas contraire, on revient au modèle géologique fin que l'on modifie de façon à améliorer le calage des données de production. Le processus itératif est alors répété jusqu'à ce que le calage soit jugé satisfaisant.

Selon l'invention, la modification du modèle géologique est réalisée par modification des valeurs de proportions de faciès lithologiques affectées à chaque maille du modèle géologique. Il existe donc autant de paramètres à modifier que le modèle comporte de mailles. Ce nombre beaucoup trop important de paramètres pour une utilisation pratique, conduit à effectuer une paramétrisation adaptée du modèle géologique. Cette paramétrisation permet de réduire le nombre de paramètre à modifier à chaque itération tout en permettant d'ajuster les proportions de faciès lithologiques du modèle géologique de façon à reproduire des données dynamiques mesurées sur le terrain.

Selon l'invention, le paramètre de calage, paramètre du modèle géologique que l'on souhaite modifier pour honorer les données dynamiques, est la proportion moyenne de faciès lithologiques sur une zone. On appelle « proportions moyennes de faciès lithologiques », l'estimation globale des proportions sur un volume de discrétisation formé par un ensemble donné de mailles (zone). On appelle « proportions locales de faciès lithologiques » les données de proportions dans un volume réduit à une maille du modèle.

La méthode consiste alors à perturber directement les proportions moyennes sur une zone d'un ou plusieurs faciès suivant les directions déterminées par l'optimiseur pour réduire l'écart entre les données dynamiques et les réponses simulées associée. Une méthode de co-krigeage d'indicatrices par bloc peut permettre d'estimer les proportions d'un faciès tout en imposant la proportion moyenne voulue pour ce faciès sur une zone. La continuité spatiale des perturbations entre zone perturbée et zone non perturbée est garantie par la méthode de co-krigeage.

Partant d'un modèle géologique initial, la méthode pour modifier le modèle géologique comporte principalement les étapes suivantes :

a. on définit au moins une zone géographique Z du réservoir en sélectionnant un ensemble de mailles du modèle géologique. La zone géographique peut, par exemple, correspondre à un ou plusieurs puits, ou bien au modèle géologique dans son ensemble.

b. on sélectionne $k$ faciès dont on souhaite modifier des proportions moyennes sur la zone $Z$ ($p_Z^k$), pour améliorer le calage.

c. On sélectionne comme paramètres, c'est-à-dire comme valeurs ajustables, les proportions moyennes pour chaque faciès k sur la zone Z, notées $\left(p_Z^k\right)^f$. Au cours du processus de calage, les valeurs des paramètres sont modifiées de façon à minimiser la différence entre les données de production mesurées et les réponses simulées correspondantes. Cette modification est calculée automatiquement par l'optimiseur en fonction par exemple des dérivées de la fonction mesurant la différence entre données et réponses numériques par rapport aux paramètres du problème.

Ainsi, les proportions moyennes $\left(p_Z^k\right)^f$ sur la zone Z sont déterminées au moyen d'un processus d'optimisation.

d. on modifie les proportions des $k$ faciès lithologiques en chaque maille de la zone géographique, par une méthode de co-krigeage d'indicatrice par bloc de façon à respecter la proportion moyenne imposée $\left(p_Z^k\right)^f$ sur la zone.

Le conditionnement par krigeage est une technique connue des spécialistes.
L'algorithme décrit ci-dessous est détaillé dans :

P. Goovaerts, "Geostatistics for Natural Resources Evaluation", Oxford University Press, 1997.

Le krigeage est une technique d'interpolation basée sur une combinaison linéaire des données statiques disponibles. Les coefficients de pondération ont la particularité de dépendre des corrélations entre les données et le point où l'on cherche à déterminer l'estimation de krigeage. Le krigeage permet de construire un modèle moyen et déterministe, représentatif du réservoir. Dans le cas présent, connaissant les valeurs des proportions en certains points, on peut estimer les proportions en tout point à partir d'une technique de krigeage. La technique de co-krigeage est aussi une technique de combinaison linéaire utilisée pour construire un modèle moyen. Sa particularité est d'intégrer une information relative à une seconde propriété en sus des mesures directes de la propriété que l'on cherche à estimer. Par exemple, connaissant les valeurs des proportions en certains points ainsi que la valeur moyenne des proportions sur certaines zones, on peut estimer les proportions en tout point à partir d'une technique de co-krigeage. Les proportions moyennes sur des zones sont considérées comme la variable secondaire, d'où le nom de co-krigeage par bloc.

Pour perturber directement les proportions de faciès, le co-krigeage est ici appliqué aux fonctions indicatrices associées à chaque faciès. Une fonction indicatrice est une fonction binaire ne pouvant prendre que les valeurs 0 et 1. Dans le cas de la méthode, une fonction indicatrice $I_k$ est définie pour chaque faciès $k$ en chaque maille du modèle géologique. Elle prend la valeur 1 si le faciès $k$ est présent dans la maille considérée, et la valeur 0 sinon. Un résultat connu des spécialistes est que l'estimateur de la fonction $I_k$ obtenu par co-krigeage en un point est égal à la probabilité d'occurrence du faciès $k$ en ce point, connaissant les données utilisées dans le co-krigeage (proportion du faciès $k$ en certains points ou valeur moyenne sur certaines zones). Le co-krigeage d'indicatrices par blocs fournit donc directement une estimation des proportions de faciès.

Le krigeage est basé sur une combinaison linéaire des données statiques disponibles, pondérées par des coefficients liés aux corrélations entre ces données et le point où l'on se trouve. Ces corrélations dépendent de la distance entre les données et le point, et sont exprimées à l'aide d'un variogramme. Ce variogramme définit une zone d'influence autour de chaque point, telle que tout autre point situé au-delà de cette zone n'est pas corrélé au point considéré. La valeur de la corrélation entre deux points corrélés dépend de la distance séparant ces points. Dans le cas du krigeage d'indicatrices, le choix du variogramme associé à chaque indicatrice (et donc à chaque faciès) détermine en grande partie les tendances spatiales des proportions, et joue donc un rôle important sur le modèle géologique.

Selon l'invention, pour chaque faciès, toute proportion, déduite de l'étape de co-krigeage par bloc, se trouvant inférieure à 0 est ramenée à 0 (ou une valeur proche de 0). De même, toute proportion se trouvant supérieure à 1 est ramenée à 1 (ou une valeur proche de 1).

Enfin, on normalise l'ensemble des proportions de faciès pour que sur chaque maille, la somme des proportions de faciès soit égale à 1.

e. on simule un nouveau modèle géologique contraint par lesdites proportions de faciès lithologiques modifiées.

4 Optimisation de l'exploitation du milieu souterrain à partir du modèle calé

A partir de ce modèle géologique calé, c'est-à-dire respectant les données statiques et les données dynamiques, il est possible d'apprécier le mode de fonctionnement de la zone souterraine étudiée, de prédire la production du réservoir et ainsi, d'optimiser son exploitation en testant différents scénarios de production. Un scénario de production comporte entre autre la détermination de l'emplacement d'un puits de production ou d'un puits d'injection, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...).

La méthode est particulièrement intéressante dans le cas de perturbations locales puisqu'elle assure la continuité des perturbations sur l'ensemble du domaine. On peut appliquer la méthode soit pour perturber directement les courbes de proportions verticales, soit pour perturber la matrice de proportions de faciès déduites des courbes de proportions verticales. Dans le premier cas, la perturbation peut affecter l'ensemble du modèle géologique, des zones localisées autour des puits ou des couches du modèle géologique. Dans le deuxième cas, la perturbation peut affecter l'ensemble du modèle géologique ou n'importe quel sous-domaine du modèle géologique. Cette souplesse relative à la définition de la zone s'avère importante notamment pour tenir compte des données offrant une large couverture spatiale comme les données sismiques.

**Mode de réalisation 1**

Selon un mode de réalisation, les zones correspondent à des puits. Dans ce cas, la modification des mailles de la zone correspond à une modification des courbes de proportions verticales. La courbe de proportions verticales peut être modifiée de façon globale ou locale. La méthode permet une perturbation continue des proportions. Dans ce cadre, une déformation locale est obtenue soit en perturbant une unique courbe de proportions verticales, auquel cas la déformation est localisée autour des puits associés à cette courbe, soit en perturbant les courbes de proportions verticales pour les différents puits ou groupes de puits sur un intervalle donné, auquel cas la déformation peut être très étendue latéralement, mais restreinte verticalement.

Lorsqu'on s'intéresse aux courbes de proportions verticales, on n'impose aucun conditionnement aux puits, on impose uniquement une moyenne sur un bloc.

On dispose initialement d'une courbe de proportion $R^0(u)$ représentative des variations de la proportion d'un faciès le long d'un puits. Le but de la méthode de co-krigeage est de modifier la courbe $R^0(u)$ pour obtenir une courbe $R(u)$ respectant les différentes conditions imposées. Dans le cas présent, il s'agit d'imposer une valeur moyenne sur une zone donnée.

On suppose que $R(u)$ a une fonction de covariance $C(h)$, $h$ étant la distance entre deux points. On définit $\overline{R}(u_\beta)$ la moyenne de $R(u)$ sur un bloc $B_\beta$ centré sur le point $u_\beta$. On suppose que $\overline{R}(u_\beta)$ est connue sur $n_\beta$ blocs $B_\beta$, $\beta \in [1, n_\beta]$. La moyenne $\overline{R}(u_\beta)$ est considérée comme une variable secondaire du krigeage. L'estimateur de co-krigeage simple peut s'écrire :

$$R(u) = R^0(u) + \sum_{\beta=1}^{n_\beta} \mu_\beta(u)\overline{C}(B_\beta, u)$$

où les valeurs $\mu_\beta$, $\beta = 1,\cdots, n_\beta$ sont les poids du co-krigeage simple et $\overline{C}(B_\beta, u)$ est la covariance entre le bloc $B_\beta$ et le point $u$. Ces poids sont déterminés par la résolution du système linéaire :

$$\begin{bmatrix} \overline{\overline{C}}_{B_1 B_1} & \cdots & \overline{\overline{C}}_{B_1 B_{n_\beta}} \\ \vdots & \ddots & \vdots \\ \overline{\overline{C}}_{B_{n_\beta} B_1} & \cdots & \overline{\overline{C}}_{B_{n_\beta} B_{n_\beta}} \end{bmatrix} \begin{bmatrix} \mu_1 \\ \vdots \\ \mu_{n_\beta} \end{bmatrix} = \begin{bmatrix} \overline{R}(u_1) - \overline{R}^0(u_1) \\ \vdots \\ \overline{R}(u_{n_\beta}) - \overline{R}^0(u_{n_\beta}) \end{bmatrix}$$

où $\overline{C}_{B_\alpha B_\beta}$ est la covariance entre le bloc $B_\alpha$ et le bloc $B_\beta$.

Cette méthode n'est pas limitée au co-krigeage simple. Tout autre type de co-krigeage peut être considéré.

Exemple d'applications

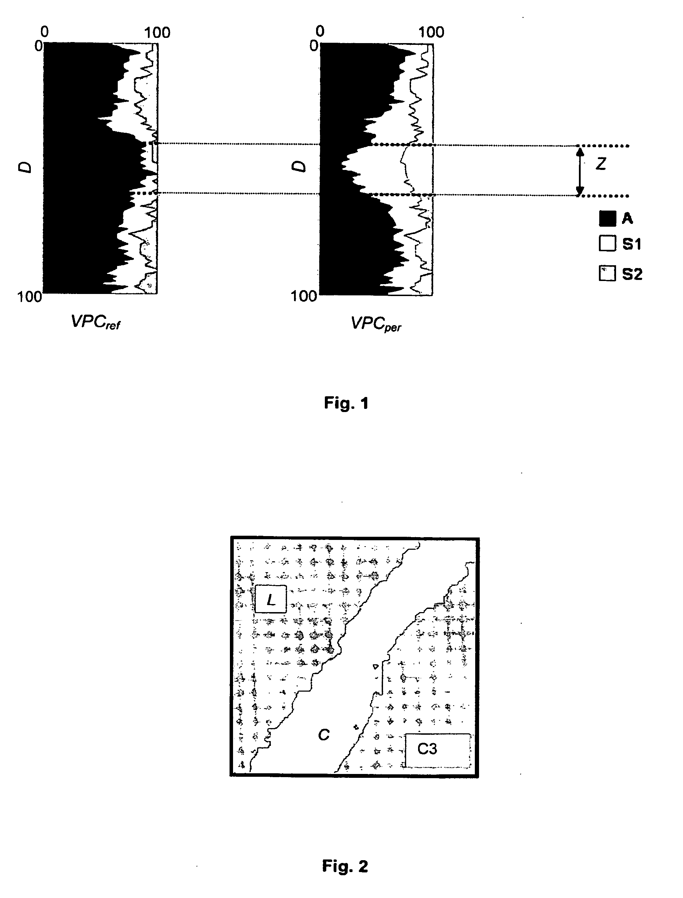

L'exemple d'application présenté ici est la perturbation d'une courbe de proportion verticale. Le modèle est composé de trois faciès, un faciès argile (A) et deux faciès sables (S1) et (S2). Le réservoir est composé de 100 couches. Pour caler le modèle géologique avec les données dynamiques, on souhaite augmenter la proportion de sable dans une zone centrale Z regroupant les couches 40 à 60. On représente sur la Figure 1 la courbe de proportions verticales initiale ($VPC_{ref}$), et la courbe obtenue après perturbation. La deuxième courbe ($VPC_{per}$) est le résultat de la méthode selon l'invention, en imposant sur la zone $Z$, les proportions moyennes suivantes :

$$\begin{cases} p_Z(A) = 0.3 \\ p_Z(S_1) = 0.46 \\ p_Z(S_2) = 0.23 \end{cases}.$$

On note des différences essentielles avec les méthodes antérieures. Tout d'abord, la méthode selon l'invention assure la continuité de la courbe de proportions, même après une perturbation locale. De plus, le choix du variogramme associé aux proportions d'un faciès donné est plus naturel : on reprend en effet le variogramme identifié pour le faciès en question.

**Mode de réalisation 2**

Selon un autre mode de réalisation, la zone correspond à un sous volume du modèle géologique. Dans ce cas, la modification des mailles de la zone correspond à une modification de la matrice de proportions déduite des courbes de proportions verticales. Le calage des données de sismique 4D en sus des données de production peut nécessiter une plus grande flexibilité dans la définition du sous-domaine à modifier, que ne le propose la méthode de modifications des courbes de proportions de faciès.

Si par exemple, les données sismiques indiquent la présence d'un chenal, on peut le définir comme une zone et essayer d'augmenter la proportion de sable sur cette zone pour améliorer le calage des données.

La méthode est identique au cas précédent, à ceci près qu'il est possible d'utiliser des données de conditionnement aux puits. Le conditionnement aux puits est introduit dans l'algorithme de co-krigeage de la façon suivante : si le conditionnant sur une maille $m$ est le faciès $k$, on impose $p^k(m)=1$ et $\forall l \neq k, p^l(m)=0$.

La méthode de co-krigeage utilisée est une méthode de co-krigeage simple.

On suppose $R(u)$ connu sur $n_\alpha$ points $u_\alpha$ , $\alpha \in [1, n_\alpha]$ et caractérisé par une fonction de covariance $C(h)$, $h$ étant la distance entre deux points. On définit $\overline{R}(u_\beta)$ la moyenne de $R(u)$ sur un bloc $B_\beta$ centré sur le point $u_\beta$. On suppose que $\overline{R}(u_\beta)$ est connue sur $n_\beta$ blocs $B_\beta$, $\beta \in [1, n_\beta]$. La moyenne $\overline{R}(u_\beta)$ est considérée comme une variable secondaire. L'estimateur de co-krigeage simple peut s'écrire :

$$R(u) = R^0(u) + \sum_{\alpha=1}^{n_\alpha(u)} \lambda_\alpha(u) C(u_\alpha - u) + \sum_{\beta=1}^{n_\beta} \mu_\beta(u) \overline{C}(B_\beta, u)$$

où $\lambda_\alpha$ et $\mu_\beta$ sont les poids du co-krigeage simple. Ces poids sont déterminés par la résolution du système linéaire :

$$\begin{bmatrix} C_{11} & \cdots & C_{1n_\alpha} & \overline{C}_{1B_1} & \cdots & \overline{C}_{1B_{n_\beta}} \\ \vdots & \ddots & \vdots & \vdots & \ddots & \vdots \\ C_{n_\alpha 1} & \cdots & C_{n_\alpha n_\alpha} & \overline{C}_{n_\alpha B_1} & \cdots & \overline{C}_{n_\alpha B_{n_\beta}} \\ \overline{C}_{B_1 1} & \cdots & \overline{C}_{B_1 n_\alpha} & \overline{\overline{C}}_{B_1 B_1} & \cdots & \overline{\overline{C}}_{B_1 B_{n_\beta}} \\ \vdots & \ddots & \vdots & \vdots & \ddots & \vdots \\ \overline{C}_{B_{n_\beta} 1} & \cdots & \overline{C}_{B_{n_\beta} n_\alpha} & \overline{\overline{C}}_{B_{n_\beta} B_1} & \cdots & \overline{\overline{C}}_{B_{n_\beta} B_{n_\beta}} \end{bmatrix} \begin{bmatrix} \lambda_1 \\ \vdots \\ \lambda_{n_\alpha} \\ \mu_1 \\ \vdots \\ \mu_{n_\beta} \end{bmatrix} = \begin{bmatrix} R(u_1) - R^0(u_1) \\ \vdots \\ R(u_\alpha) - R^0(u_\alpha) \\ \overline{R}(u_1) - \overline{R}^0(u_1) \\ \vdots \\ \overline{R}(u_{n_\beta}) - \overline{R}^0(u_{n_\beta}) \end{bmatrix}$$

où $\overline{C}_{B_\beta \alpha}$ est la covariance entre le bloc $B_\beta$ et le point $u_\alpha$.

Pour accélérer la résolution, on détermine pour chaque point un ellipsoïde d'influence à l'aide du variogramme. Les trois axes de l'ellipsoïde sont définis par les longueurs de corrélation et les axes d'anisotropie du variogramme. La covariance entre un point donné et un autre point extérieur à son ellipsoïde d'influence est nulle. Par conséquent, les différents calculs de covariance sont effectués uniquement à l'intérieur de cet ellipsoïde.

Cette méthode n'est pas limitée au co-krigeage simple. Tout autre type de co-krigeage peut être considéré.

Exemple d'applications

L'exemple d'application présenté est un cas synthétique représentant une simulation de test de puits dans un chenal. Un modèle initial est construit à l'aide d'une simulation géostatistique par la méthode des Gaussiennes seuillées (Le Loc'h and Galli, 1997). Les proportions de faciès initiales donnent les tendances principales de la répartition spatiale des faciès. Le modèle réservoir est supposé décrit par quatre faciès qui sont, par ordre de qualité réservoir croissante, des "argiles" (F1), des "argiles laminées" (F2), des "sables laminés" (F3) et des "sables" (F4).

- Le Loc'h G. and Galli, A., 1997 : Truncated Plurigaussian method : theoretical and practical points of view. Geostatistiqcs Wollongong'96, E.Y. Baafi and N.A. Schofields eds, Kluwe, p. 211-222.

Un test de puit (draw-down) est simulé avec des proportions de faciès de référence sur une période de 100h avec un débit constant de 650m$^3$/jour. Les données synthétiques de tests de puits sont la différence de pression et sa dérivée.

On applique la méthode selon l'invention (avec co-krigeage d'indicatrices) pour améliorer le calage des données de test de puits. On définit comme paramètre de calage la proportion moyenne de faciès "argiles" dans la région "levées" (L), la proportion moyenne du faciès "argiles laminées" dans la région "levées", la proportion moyenne du faciès "sables" dans la région "chenaux" et la proportion moyenne du faciès "sables laminés" dans la région "chenaux" (C). L'optimisation est réalisée à partir de valeurs de proportions en chaque maille obtenues en appliquant la méthode de co-krigreage aux proportions de référence avec les paramètres initiaux donnés dans le Tableau 1.

**Tableau 1 : Définition des paramètres**

| Région | Faciès | Valeur de référence | Valeur initiale | Valeur optimale |
|---|---|---|---|---|
| Levée (L) | F1 | 0.492 | 0.726 | 0.478 |
| Levée (L) | F2 | 0.418 | 0.183 | 0.428 |
| Chenaux (C) | F3 | 0.443 | 0.72 | 0.471 |
| Chenaux (C) | F4 | 0.459 | 0.18 | 0.436 |

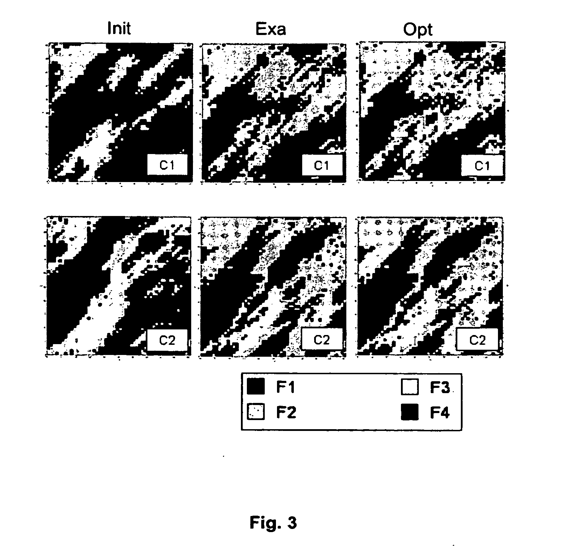

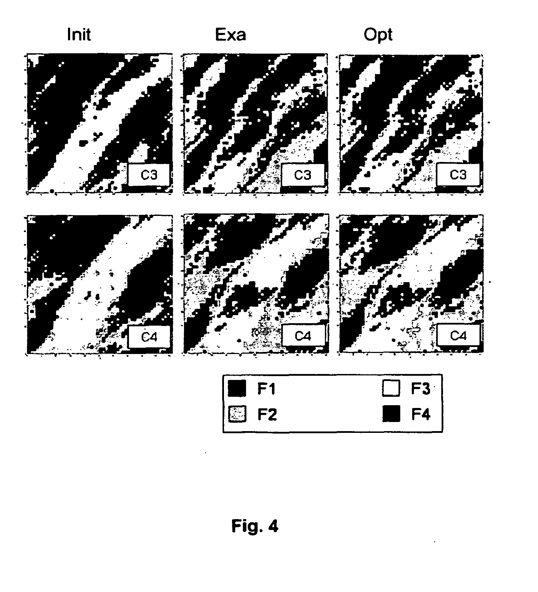

L'algorithme converge en 28 itérations. La fonction objectif décroît de 26.475 jusqu'à 0.015. Les valeurs optimales obtenues pour les différents paramètres sont proches des valeurs de référence et permettent une restitution quasi-parfaite des résultats de référence obtenus pour le test de puit. La Figure 3 et la Figure 4 montrent l'impact du calage sur la réalisation en faciès : la figure 3 représente la distribution spatiale des faciès sur le modèle réservoir avant (*Init*) et après (*Opt*) calage des proportions de faciès pour des couches sédimentaires C1 et C2, ainsi que la distribution spatiale exacte (*Exa*) des faciès ; la figure 4 représente la distribution spatiale des faciès sur le modèle réservoir avant (*Init*) et après (*Opt*) calage des proportions de faciès pour des couches sédimentaires C3 et C4, ainsi que la distribution spatiale exacte (*Exa*) des faciès.

**Revendications**

1. Méthode pour optimiser l'exploitation d'un milieu souterrain, à partir d'un modèle géologique constitué d'un ensemble de mailles discrétisant ledit milieu, une valeur de faciès étant affectée à chaque maille, dans laquelle on mesure une différence entre des valeurs de données dynamiques mesurées et des valeurs de données dynamiques simulées à l'aide d'un simulateur d'écoulement appliqué audit modèle géologique, une donnée dynamique étant une donnée variant au cours du temps en fonction des écoulements de fluide dans le milieu souterrain, et l'on modifie ledit modèle géologique pour réduire ladite différence, **caractérisé en ce que** la méthode comporte les étapes suivantes :

   a on sélectionne au moins un ensemble de mailles dudit modèle géologique, ledit ensemble de maille définissant une zone géographique Z au sein dudit milieu souterrain ;

   b. on détermine pour $k$ faciès, au moyen d'un processus d'optimisation, une proportion moyenne $\left(p_z^k\right)'$ sur ladite zone Z permettant de réduire ladite différence ;

   c. on modifie les proportions des $k$ faciès en chaque maille de la zone géographique, par une méthode de co-krigeage d'indicatrice par bloc contrainte par lesdites proportions moyennes $\left(p_z^k\right)'$, et on affecte une valeur égale à 0 à toute proportion ainsi modifiée et inférieure à 0, on affecte une valeur égale à 1 à toute proportion ainsi modifiée et supérieure à 1, et enfin, on normalise l'ensemble des proportions de faciès ainsi modifiée pour que dans chaque maille, la somme des proportions de faciès soit égale à 1 ;

   d. on simule un nouveau modèle géologique contraint par lesdites proportions de faciès modifiées, et l'on optimise l'exploitation dudit milieu souterrain au moyen dudit modèle ainsi simulé.

2. Méthode selon la revendication 1, dans laquelle ladite zone géographique est un sous domaine du modèle géologique, un groupe de sous domaines du modèle géologique ou l'ensemble du modèle géologique.

**Claims**

1. A method of optimizing the development of an underground medium, from a geological model consisting of a set of grid cells discretizing said medium, a facies value being assigned to each cell, wherein a difference is measured between measured dynamic data values and simulated dynamic data values by means of a flow simulator applied to the geological model, and said geological model is modified in order to reduce said difference, **characterized in that** the method comprises the following stages:

   a. defining at least one geographical zone Z within said underground medium by selecting a set of cells of said geological model,

   b. determining, for $k$ facies, by means of an optimization process, an average proportion $\left(p_z^k\right)^f$ in said zone Z allowing said difference to be reduced,

   c. modifying the proportions of the k facies in each cell of the geographical zone, by means of a block indicator cokriging method constrained by said average proportions $\left(p_z^k\right)^f$, assigning value 0 to any proportion thus modified and less than 0, assigning value 1 to any proportion thus modified and greater than 1, and finally normalizing all the facies proportions thus modified so that, in each cell, the sum of the facies proportions is equal to 1,

   d. simulating a new geological model constrained by said modified facies proportions and optimizing the development of said underground medium by means of said model thus simulated.

2. A method as claimed in claim 1, wherein said geographical zone is a sub-domain of the geological model, a group of sub-domains of the geological model or the entire geological model.

**Patentansprüche**

1. Verfahren zur Optimierung der Erkundung eines unterirdischen Milieus ausgehend von einem geologischen Modell, bestehend aus einer Gruppe von Maschen, die dieses Milieu diskretisieren, wobei jeder Masche ein Fazieswert zugewiesen ist, in welchem eine Differenz zwischen den Werten von gemessenen dynamischen Daten und den Werten von dynamischen Daten, die mithilfe eines auf dieses geologische Modell angewandten Strömungssimulators simuliert wurden, gemessen wird, wobei ein dynamisches Datum ein Datum ist, das in Abhängigkeit von den Strömungen des Fluids im unterirdischen Milieu im Laufe der Zeit variiert, und dieses geologische Modell modifiziert wird, um diese Differenz zu reduzieren, **dadurch gekennzeichnet, dass** das Verfahren die folgenden Schritte umfasst:

   a. mindestens eine Gruppe von Maschen dieses geologischen Modells wird gewählt, wobei diese Gruppe von Maschen eine geographische Zone Z in diesem unterirdischen Milieu definiert;

   b. für k Fazies wird mithilfe eines Optimierungsprozesses ein mittlerer Anteil $(p_z^k)^f$ in dieser Zone z bestimmt, der es erlaubt, diese Differenz zu reduzieren;

   c. die Anteile der k Fazies in jeder Masche der geographischen Zone werden durch eine Cokriging-Methode der Indikatrix pro Beschränkungsblock durch diese mittleren Anteile $(p_z^k)^f$ modifiziert, und jedem Anteil, der derart modifiziert wurde und kleiner als 0 ist, wird ein Wert gleich 0 zugewiesen, jedem Anteil, der derart modifiziert wurde und größer als 1 ist, wird ein Wert gleich 1 zugewiesen, und schließlich wird die Gesamtheit der derart modifizierten Fazienanteile normalisiert, damit die Summe der Faziesanteile in jeder Masche gleich 1 ist;

   d. ein neues geologisches Modell wird simuliert, das durch dieses modifizierten Faziesanteile beschränkt ist, und die Erkundung des unterirdischen Milieus wird mithilfe des derart simulierten Modells optimiert.

2. Verfahren nach Anspruch 1, wobei die geographische Zone eine Unterdomäne des geologischen Modells, eine Gruppe von Unterdomänen des geologischen Modells oder die Gesamtheit des geologischen Modells ist.

**Fig. 1**

**Fig. 2**

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2914434

- FR 0610792

**Littérature non-brevet citée dans la description**

- **RamaRao, B.S ; Lavenue, A.M. ; Marsilly, G. de ; Marietta, M.G.** Pilot point methodology for automated calibration of an ensemble of conditionally simulated transmissivity fields. 1. Theory and computational experiments. *WRR,* 1995, vol. 31 (3), 475-493
- **Gomez-Hernandez, J. ; Sahuquillo, A. ; Capilla, J.E.** Stochastic simulation of transmissivity fields conditional to both transmissivity and piezometric data. *1. Theory, J. of Hydrology,* 1997, vol. 203, 162-174
- **Hu, L-Y.** Gradual Deformation and iterative calibration of Gaussian-related stochastic models. *Math. Geol.,* 2000, vol. 32 (1), 87-108
- **Hoffman B.T. ; Caers, J.** History matching by jointly perturbing local facies proportions and their spatial distribution: Application to a North Sea reservoir. *Journal of Petroleum Science and Engineering,* 2007, vol. 57, 257-272
- **Hoffman B.T. ; Caers, J.** Regional probability perturbation for history matching. *J. Pet. Sci. Eng.,* vol. 46, 53-71
- **Liu, N. ; Oliver, D.S.** Automatic History Matching of Geologic Facies. *SPE 84594, Proceeding of the 2003 SPE Annual, Technical Conference and Exhibition, SPE Journal,* 2004, vol. 9 (4), 1-15

- Truncated Plurigaussian method : theoretical and practical points of view. **Le Loc'h G. ; Galli, A.** Geostatistics Wollongong'96. Kluwe, 1997, 211-222
- Truncated plurigaussian method : theoretical and practical points of view. **Le Loc'h G. ; Galli A.** Geostatistics Wollongong'96. Kluwer, 1997, 211-222
- **P. Goovaerts.** Geostatistics for Natural Resources Evaluation. Oxford University Press, 1997
- **S. Strebelle.** Conditional Simulation of Complex Geological Structures Using Multi-point Statistics. *Mathematical Geology,* 2002, vol. 34 (1), 1-21
- **Doligez B. ; Fournier F. ; Jolivet G. ; Gancarski S. ; Beucher H.** Seismic facies map integration in geostatistical geological model: a field case. EAGE, conference & technical exhibition of European Association of Geoscientists & Engineers. *64th, Florence,* 27 Mai 2005, vol. 2, 215-219
- **Barens L. ; Biver P.** Reservoir Facies Prediction from Geostatistical Inverted Seismic Data. *Abu Dhabi International Conference and Exhibition,* 10 Octobre 2004
- Truncated Plurigaussian method : theoretical and practical points of view. **Le Loc'h G. ; Galli, A.** Geostatistiqcs Wollongong'96. Kluwe, 1997, 211-222